(19) Europäisches Patentamt
European Patent Office
Office européen des brevets

(11) **EP 3 689 991 A1**

(12) **EUROPEAN PATENT APPLICATION**
published in accordance with Art. 153(4) EPC

(43) Date of publication:
**05.08.2020 Bulletin 2020/32**

(21) Application number: **18861414.3**

(22) Date of filing: **27.09.2018**

(51) Int Cl.:
*C09J 7/00* (2018.01)    *C09J 201/00* (2006.01)

(86) International application number:
**PCT/JP2018/036051**

(87) International publication number:
**WO 2019/065886 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2017  JP 2017192139
29.06.2018  JP 2018124925
23.07.2018  JP 2018137759**

(71) Applicant: **Nitto Denko Corporation
Ibaraki-shi, Osaka 567-8680 (JP)**

(72) Inventors:
• **TAKASHIMA Atsushi
Ibaraki-shi
Osaka 567-8680 (JP)**
• **MAKIHATA Yosuke
Ibaraki-shi
Osaka 567-8680 (JP)**
• **MIZUHARA Ginji
Ibaraki-shi
Osaka 567-8680 (JP)**

(74) Representative: **Gill Jennings & Every LLP
The Broadgate Tower
20 Primrose Street
London EC2A 2ES (GB)**

(54) **ADHESIVE ARTICLE**

(57)    The present invention relates to an adhesive article including a linear adhesive body and a non-adhesive layer covering a longitudinal direction surface of the adhesive body, wherein the adhesive article expresses adhesiveness when the non-adhesive layer is broken by stretching the adhesive article.

**Description**

TECHNICAL FIELD

The present invention relates to an adhesive article and in more detail, to an adhesive article that expresses adhesiveness by stretching.

BACKGROUND ART

Adhesive sheets and adhesive tapes are used in, for example, adhesion of various adherends such as a metal, a glass, a wood, a paper, a corrugated cardboard and a plastic material. Such adhesive sheets are that its adhesive surface is generally protected with a separator (release sheet) in order to protect the adhesive surface until sticking on an adherend. Furthermore, in the case of a rolled form such as a rolled adhesive tape, a substrate in which a back surface contacting an adhesive surface was subjected to a release treatment is used in order to facilitate rewinding.

However, in an adhesive sheet using a separator, the separator to be peeled when using is disposed after peeling. For this reason, the use of a separator is undesirable from the standpoints of resource saving and cost reduction. Furthermore, in case where a user uses an adhesive sheet or an adhesive tape while wearing globes or in case where an adhesive sheet or adhesive tape to be used has a small size, there is a problem that workability when peeling a separator from an adhesive sheet or when rewinding an adhesive tape is poor. Therefore, it is considered to be useful if an adhesive sheet or adhesive tape that does not require a separator and a release treatment of a back surface of a substrate can be provided.

In connection with this, Patent Literature 1 describes an adhesiveness reexpression method including fixing a non-adhesive substance to an adhesive surface of an adhesive sheet by an interfacial catalytic reaction to form a non-adhesive thin layer and breaking the non-adhesive thin layer when sticking on an adherend, thereby reexpressing the adhesiveness.

CITATION LIST

PATENT LITERATURE

Patent Literature 1: Japanese Patent No. 4380837

SUMMARY OF INVENTION

TECHNICAL PROBLEM

However, in a case where the surface shape of an adherend is a curved surface shape or a complicated shape such as an uneven shape, when a sheet-shaped (film-shaped) adhesive sheet is tried to adhere to the adherend, wrinkles may be generated in the adhesive sheet or overlaps may be generated in a part of the adhesive sheet. Thus, the adhesive sheet may be difficult to apply to such an adherend.

In a case where the adhesive sheet is desired to apply to, for example, a narrow region, it may be considered to cut the adhesive sheet finely and use the same, but cuttable width has a limit. In such a case, it may be considered to use a liquid adhesive. However, there are possibilities that dripping of an adhesive is generated and the thickness of an adhesive layer becomes uneven.

In view of the above problems, the present invention has an object to provide an adhesive article capable of expressing satisfactory adhesiveness by simple operation when used while substantially having non-adhesiveness in the initial state and further capable of applying to various surface shapes and regions of an adherend.

SOLUTION TO PROBLEM

One embodiment of the present invention relates to an adhesive article including a linear adhesive body and a non-adhesive layer covering a longitudinal direction surface of the adhesive body, wherein the adhesive article expresses adhesiveness when the non-adhesive layer is broken by stretching the adhesive article.

In one embodiment of the present invention, the adhesive article may further include a linear core material and an adhesive layer covering a longitudinal direction surface of the core material.

In one embodiment of the present invention, the adhesive article is preferably a yarnlike adhesive article.

In one embodiment of the present invention, the non-adhesive layer preferably contains a polymer material.

In one embodiment of the present invention, the non-adhesive layer preferably contains an aggregate of a plurality of emulsion particles.

In one embodiment of the present invention, a tack value of the adhesive article after stretching to twice in a lengthwise direction measured by the following probe tack test 2 is preferably at least 1 gf larger than a tack value before stretching measured by the following probe tack test 1.

(Probe tack test 1)

After a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

(Probe tack test 2)

After the adhesive article has been stretched in a lengthwise direction and then a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

ADVANTAGEOUS EFFECTS OF INVENTION

The adhesive article according to one embodiment of the present invention is substantially non-adhesive in the initial state and therefore does not require a separator and a release treatment. Furthermore, the adhesive article can express adhesiveness by simple operation and therefore has excellent workability. Additionally, the adhesive article can be applied to various surface shapes and regions of an adherend.

BRIEF DESCRIPTION OF DRAWINGS

Fig. 1 is a schematic cross-sectional view of one configuration example of an adhesive article.
Fig. 2 is a schematic cross-sectional view of one configuration example of an adhesive article.

DESCRIPTION OF EMBODIMENTS

The embodiments of the present invention are described in detail below.

In the following drawings, members and portions having the same action are sometimes explained by allotting the reference signs to those, and the duplicating descriptions are sometimes omitted or simplified. Furthermore, the embodiments shown in the drawings are schematically shown in order to clearly describe the present invention, and a size and a scale of the actual product are not always correctly shown.

Furthermore, in the present description, the proportion (percentage, parts and the like) based on mass is the same as the proportion (percentage, parts and the like) based on weight.

The adhesive article according to the embodiment of the present invention is an adhesive article including a linear adhesive body and a non-adhesive layer covering a longitudinal direction surface of the adhesive body, and the adhesive article expresses adhesiveness when the non-adhesive layer is broken by stretching the adhesive article.

The adhesive article of this embodiment is an adhesive article that expresses adhesiveness by stretching, and the adhesive article does not substantially have adhesiveness in the initial state before stretching, that is, is substantially non-adhesive. Adhesiveness due to the adhesive body is expressed when the non-adhesive layer is broken by stretching. Specifically, the non-adhesive layer is broken in the course of stretching, and fragments of the non-adhesive layer broken by stretching are typically adhered to the surface of the adhesive article (adhesive body). On the other hand, surface area of the adhesive article is increased by the stretching of the adhesive article. As a result, in the adhesive article after stretching, the adhesive body is exposed at the surface to which the fragments of the non-adhesive layer are not adhered, and adhesiveness due to the adhesive body is thus expressed.

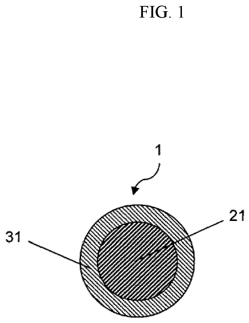

With regard to one configuration example of the adhesive article according to this embodiment, a schematic cross-sectional view in a direction vertical to a longitudinal direction of the adhesive article is shown in Fig. 1. In an adhesive article 1 shown in Fig. 1, a non-adhesive layer 31 covers a surface (longitudinal direction surface) of a linear adhesive body 21. The term "linear" used herein is a concept including a form of straight line shape, a form of curved line shape, a form of broken line shape and the like and further including the state bendable in various directions and at various angles, like a yarn (hereinafter referred to as yamlike).

The adhesive article of this configuration example is a supportless adhesive article including the linear adhesive body and the non-adhesive layer. The cross-sectional shape of the adhesive article of this configuration example is a circle, but this embodiment is not limited to this, and the cross-sectional shape can be an ellipse and a rectangle such as a square, other than a circle. In this embodiment, when the cross-sectional shape of the adhesive article is a circle, the diameter of the cross-section is not particularly limited. However, the diameter is too small, the adhesive article may be broken when stretching. Therefore, the diameter is, for example, preferably 10 $\mu$m or more and more preferably 30 $\mu$m or more. On the other hand, when the diameter is too large, large stress may be required when stretching. Therefore, the diameter is, for example, preferably 2000 $\mu$m or less and more preferably 1000 $\mu$m or less.

In this case, the diameter of the cross-section of the adhesive body is not particularly limited. However, if the diameter is too small, the adhesive article may be broken when stretching. Therefore, the diameter is, for example, preferably 9.8 $\mu$m or more and more preferably 29.8 $\mu$m or more. On the other hand, when the diameter is too large, large stress may be required when stretching. Therefore, the diameter is, for example, 1999 $\mu$m or less and more preferably 999 $\mu$m or less.

The thickness of the non-adhesive layer covering the adhesive body is, for example, preferably 0.1 $\mu$m or more and more preferably 1 $\mu$m or more, from standpoint of securing of substantial non-adhesiveness before stretching and protection of the adhesive layer. On the other hand, the thickness is, for example, preferably 60 $\mu$m or less and more preferably 20 $\mu$m or less, from the standpoint of expression of adhesive force.

The edge of the adhesive body may be covered and may not covered with the non-adhesive layer. For example, in the case where the adhesive article is cut in the course of production or when using, there is a possibility that the edge of the adhesive body is not covered with the non-adhesive layer.

In the adhesive article of this embodiment, the non-adhesive layer covers the adhesive body in the initial state before stretching, but the adhesive article expresses adhesiveness when the non-adhesive layer is broken by stretching the adhesive article.

In order that the non-adhesive layer appropriately has substantial non-adhesiveness, storage stability at 23°C of the non-adhesive layer is preferably $1\times10^7$ Pa or more and more preferably $5\times10^7$ Pa or more. On the other hand, the storage stability at 23°C of the non-adhesive layer is, for example, preferably $1\times10^{10}$ Pa or less and more preferably $5\times10^9$ Pa or less, from the standpoint of flexibility. The storage stability at 23°C of the non-adhesive layer is measured by a dynamic viscoelasticity equipment (trade name: RSA-III, manufactured by TA Instruments), and in detail, is measured by a measurement method described in the column of examples.

In the adhesive article of this embodiment, streaks (cuts) may be formed on the non-adhesive layer in order to assist break of the non-adhesive layer when stretching. The direction of streaks in case of forming streaks on the non-adhesive layer is not particularly limited, but the break by stretching of the non-adhesive layer sometimes relatively easily occurs in the direction orthogonal to the stretching direction. In such a case, streaks are preferably formed in the stretching direction in order to finely break the non-adhesive layer by stretching. The direction of forming streaks is not limited to one direction, and streaks may be formed in a plurality of arbitrary directions, for example, two directions of a stretching direction and a direction orthogonal to the stretching direction. By forming streaks (cuts) on the non-adhesive layer, the non-adhesive layer can be broken into finer fragments by stretching.

The material of the non-adhesive layer that can be used can be appropriately selected from materials that do not substantially have adhesiveness in themselves, can cover the adhesive layer and can be broken by stretching, and examples thereof include polymer materials, metal materials and inorganic materials. Above all, polymer materials are preferably used from the standpoint of easy break by stretching. The polymer materials include a resin (polyolefin, polyester, polystyrene, acryl resin, vinyl chloride, phenol resin, polyurethane, nylon or the like), an elastomer, a rubber, a natural polymer (fiber cellulose, protein or the like), and starch. Above all, acryl resin is preferred because self-fusion is difficult to occur (difficult to cause blocking). One kind alone of those materials can be used or they can be used by combining two or more kinds.

The case where the non-adhesive layer contains a resin is described below. When the non-adhesive layer contains a resin, a composition containing a polymer used to form the non-adhesive layer (hereinafter referred to as a "non-adhesive layer forming polymer-containing composition") may be an aqueous dispersion type non-adhesive layer forming polymer-containing composition or may be a solvent type non-adhesive layer forming polymer-containing composition.

In the present description, the non-adhesive layer formed by an aqueous dispersion type non-adhesive layer forming polymer-containing composition is sometimes called an emulsion type non-adhesive layer, and the non-adhesive layer formed by a solvent type non-adhesive layer forming polymer-containing composition is sometimes called a solvent type non-adhesive layer. Furthermore, the term "polymer" has the concept including a copolymer.

The non-adhesive layer formed by an aqueous dispersion type non-adhesive layer forming polymer-containing composition is formed as a layer containing an aggregate of a plurality of emulsion particles. The non-adhesive layer is preferably a layer containing an aggregate of a plurality of emulsion particles (emulsion polymer particles) (emulsion type non-adhesive layer) for the reason that better adhesiveness is expressed after stretching.

In the case where the non-adhesive layer is a layer containing an aggregate of a plurality of emulsion particles (emulsion polymer particles) (emulsion type non-adhesive layer), the reason that better adhesiveness is expressed after stretching is not always obvious, but is assumed as follows. In the case where the non-adhesive layer is an emulsion type non-adhesive layer, when the adhesive article is stretched, the non-adhesive layer is broken in various directions from the interface between agglomerated emulsion particles, and fine scaly fragments are formed, thereby typically forming the state that the fragments are adhered to the surface of the adhesive article (adhesive body). On the other hand, surface area of the adhesive article increases by the stretching of the adhesive article. As a result, the surface to which the fragments of the non-adhesive layer are not adhered comes into the state that the adhesive body is exposed, and adhesiveness due to the adhesive body is thus expressed. Additionally, when the adhesive article is stuck on an adherend in the state that the non-adhesive layer in the form of fine scaly fragments is adhered to the surface of the adhesive body, scaly fragments of the non-adhesive layer get into the adhesive body by the pressure when sticking, and the exposed surface of the adhesive body increases. It is considered from this fact that adhesiveness due to the adhesive body is better expressed.

A case where the non-adhesive layer contains an aggregate of a plurality of emulsion particles containing acrylic polymer (acrylic polymer emulsion particles) is described below, but the present invention is not limited to this.

The non-adhesive layer containing an aggregate of a plurality of acrylic polymer emulsion particles can be formed using a composition containing an aqueous dispersion type acrylic polymer as the non-adhesive layer forming polymer-containing composition. The aqueous dispersion type acrylic polymer is a composition in an emulsion form in which the acrylic polymer is dispersed in water. The acrylic polymer preferably includes an acrylic copolymer wherein a main monomer unit is methyl methacrylate, n-butyl methacrylate, i-butyl methacrylate, t-butyl methacrylate, isobornyl (meth)acrylate, cyclohexyl acrylate or the like. Above all, an acrylic copolymer (1) in which a main monomer unit is n-butyl methacrylate is preferred, and specifically includes an acrylic copolymer (1-1) containing n-butyl methacrylate and a carboxyl group-containing monomer as monomer units, and an acrylic copolymer (1-2) containing n-butyl methacrylate, a carboxyl group-containing monomer, and (meth)acrylic acid $C_{1-14}$ alkyl ester other than n-butyl methacrylate, as monomer units.

The carboxyl group-containing monomer is not particularly limited, and can includes, for example, (meth)acrylic acid, carboxyethyl (meth)acrylate, carboxypentyl (meth)acrylate, itaconic acid, maleic acid, fumaric acid and crotonic acid. Above all, acrylic acid and/or methacrylic acid are preferred, and concurrent use of acrylic acid and methacrylic acid is more preferred. In the case of concurrently using acrylic acid and methacrylic acid, a ratio of amounts thereof is not particularly limited, but those are preferably used in nearly the same amounts. One kind or two or more kinds of the carboxyl group-containing monomer can be used.

In (meth)acrylic acid $C_{1-14}$ alkyl ester other than n-butyl methacrylate, an alkyl group having 1 to 14 carbon atoms may be straight chain and may be branched chain, and examples thereof include methyl (meth)acrylate, ethyl (meth)acrylate, propyl (meth)acrylate, isopropyl (meth)acrylate, n-butyl acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate. The (meth)acrylic acid $C_{1-14}$ alkyl ester is preferably acrylic acid $C_{2-12}$ alkyl ester and more preferably acrylic acid $C_{4-8}$ alkyl ester.

The acrylic copolymer (1) contains n-butyl methacrylate in an amount of preferably 50 to 99% by weight, more preferably 60 to 90% by weight and particularly preferably 60 to 70% by weight, in the whole monomer units.

The composition of the acrylic copolymer (1-1) containing n-butyl methacrylate and a carboxyl group-containing monomer as monomer units is that n-butyl methacrylate : carboxyl group-containing monomer (weight ratio) is preferably 80 to 99 : 20 to 1, more preferably 80 to 95 : 20 to 5 and particularly preferably 85 to 95 : 15 to 5. The composition of the acrylic copolymer (1-2) containing n-butyl methacrylate, a carboxyl group-containing monomer and (meth)acrylic acid $C_{1-14}$ alkyl ester other than n-butyl methacrylate, as monomer units is that n-butyl methacrylate : carboxyl group-containing monomer : (meth)acrylic acid $C_{1-14}$ alkyl ester other than n-butyl methacrylate (weight ratio) is preferably 50 to 98 : 1 to 20 : 1 to 30 (provided that the total weight of three components is 100) and more preferably 60 to 90 : 5 to 20 : 5 to 20 (provided that the total weight of three components is 100).

The acrylic copolymers (1) and (1-1) each can contain methacrylic acid $C_{1-18}$ alkyl ester other than n-butyl methacrylate or a hydroxyl group-containing monomer as monomer units, in a range of 10% by weight or less in the whole monomer units. The acrylic copolymer (1-2) can contain methacrylic acid $C_{15-18}$ alkyl ester or a hydroxyl group-containing monomer as monomer units in a range of 10% by weight or less in the whole monomer units.

The hydroxyl group-containing monomer includes hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate and (4-hydroxymethylcyclohexyl) methyl methacrylate.

The glass transition temperature of the acrylic polymer forming the non-adhesive layer containing an aggregate of a plurality of acrylic polymer emulsion particles is not particularly limited, but is preferably 5°C or higher and more preferably 10°C or higher, in order to show good non-adhesiveness. The upper limit of the glass transition temperature is not particularly limited, but is, for example, 150°C or lower from the standpoint of film formability.

In the present description, the glass transition temperature (°C) of the acrylic polymer is obtained by converting a theoretical glass transition temperature (K) calculated from the following Fox equation from monomer units constituting the acrylic polymer and the respective proportions into degree Celsius (°C).

Fox equation:

$$1/Tg = W_1/Tg_1 + W_2/Tg_2 + \cdots + W_n/Tg_n$$

Tg: glass transition temperature (K) of polymer
$Tg_1, Tg_2, \cdots Tg_n$ : glass transition temperature (K) of homopolymer of each monomer
$W_1, W_2, \cdots W_n$ : weight fraction of each monomer

Theoretical glass transition temperature obtained from Fox equation (converted into degree Celsius (°C)) well consists with the measured glass transition temperature obtained by differential scanning calorimetry (DSC), dynamic viscoelasticity or the like.

As a method for obtaining an aqueous dispersion type acrylic polymer by polymerizing the monomer, conventional polymerization methods can be used, and an emulsion polymerization method can be preferably used. As a monomer supply method in conducting the emulsion polymerization, a batch preparation method that supplies all monomer components at one time, a continuous supply (dropping) method, a split supply (dropping) method or the like can be appropriately used. A part or the whole (typically the whole) of monomers may be previously mixed with water (typically, an appropriate amount of an emulsifier is used together with water) and emulsified, and the resulting emulsion (monomer emulsion) may be supplied to a reaction vessel at one time, continuously or dividedly. The polymerization temperature can be appropriately selected depending on the kind of monomers used, the kind of a polymerization initiator, and the like, and can be, for example, about 20 to 100°C (typically 40 to 80°C).

The polymerization initiator used in polymerization can be appropriately selected from the conventional polymerization initiators depending on the kind of a polymerization method. For example, in an emulsion polymerization, an azo type polymerization initiator can be preferably used. Specific examples of the azo type polymerization initiator include 2,2'-azobisisoburyronitrile, 2,2' -azobi s(2-methylpropionamidine)disulfate, 2,2' -azobi s(2-amidinopropane)dihydrochloride, 2,2'-azobis[(2-(5-methyl-2-imidazolin-2-yl)propane]-dihydrochloride, 2,2'-azobis[2-(5-methyl-2-imidazolin-2-yl)propane]dihydrochloride, 2,2'-azobis(N,N'-dimethyleneisobutylamidine), 2,2'-azobis[N-(2-carboxyethyl)-2-methylpropionamidine]hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane) and dimethyl-2,2'-azobis(2-methylpropionate).

Other examples of the polymerization initiator include a sulfate such as potassium persulfate or ammonium persulfate; a peroxide type initiator such as benzoyl peroxide, t-butyl hydroperoxide, di-t-butyl peroxide, t-butyl peroxybenzoate, dicumyl peroxide, 1,1-bis(t-butylperoxy)-3,3,5-trimethyl cyclohexane, 1,1-bis(t-butylperoxy)cyclododecane or hydrogen peroxide; a substituted ethane type initiator such as phenyl-substituted ethane; and an aromatic carbonyl compound. Further example of the polymerization initiator includes a redox type initiator by a combination of a peroxide and a reducing agent. Examples of the redox type initiator include a combination of a peroxide and ascorbic acid (such as a combination of a hydrogen peroxide solution and ascorbic acid), a combination of a peroxide and iron (II) salt (such as a combination of a hydrogen peroxide solution and iron (II) salt), and a combination of a persulfate and sodium hydrogen sulfite.

Those polymerization initiators can be used alone or by combining two or more kinds. The amount of the polymerization initiator used can be the amount generally used, and can be selected from a range of, for example, about 0.005 to 1 part by weight (typically 0.01 to 1 part by weight) per 100 parts by weight of the total monomer components.

In the preparation of the aqueous dispersion type acrylic polymer, an emulsifier can be used as necessary. Anionic, nonionic and cationic emulsifiers can be used as the emulsifier. In general, anionic or nonionic emulsifier is preferably used. The emulsifier can be preferably used when monomer components are emulsified or when an acrylic polymer obtained by other method is dispersed in water.

The anionic emulsifier includes an alkyl sulfate type anionic emulsifier such as sodium lauryl sulfate, ammonium lauryl sulfate or potassium lauryl sulfate; a polyoxyethylene alkyl ether sulfate type anionic emulsifier such as polyoxyethylene lauryl ether sodium sulfate; a polyoxyethylene alkyl phenyl ether sulfate type anionic emulsifier such as ammonium polyoxyethylene lauryl phenyl ether sulfate or sodium polyoxyethylene lauryl phenyl ether sulfate; a sulfonate type anionic emulsifier such as sodium deodecylbenzene sulfate; and a sulfosuccinic acid type anionic emulsifier such as disodium lauryl sulfosuccinate or disodium lauryl polyoxyethylene sulfosuccinate.

The nonionic emulsifier includes a polyoxyethylene alkyl ether type nonionic emulsifier such as polyoxyethylene lauryl ether; a polyoxyethylene alkyl phenyl ether type nonionic emulsifier such as polyoxyethylene lauryl phenyl ether; polyoxyethylene fatty acid ester; and a polyoxyethylene polyoxypropylene block polymer. A radical polymerizable emulsifier (reactive emulsifier) having a structure that a radial polymerizable group (such as a propenyl group) is introduced into the above-described anionic or nonionic emulsifiers may be used.

One kind alone of those emulsifiers may be used or they may be used by combining two kinds or more. The amount of the emulsifier used is an amount capable of preparing an acrylic polymer in a form of an emulsion, and is not particularly limited. For example, the amount is appropriately selected from a range of about 0.2 to 10 parts by weight (preferably about 0.5 to 5 parts by weight) on solids basis per 100 parts by weight of the acrylic polymer. When the amount of the emulsifier used is too small, desired dispersion stability (polymerization stability, mechanical stability and the like) may be difficult to obtain. When the amount of the emulsifier used is too large, an adherend may be contaminated.

The above description is mainly described in the case that the non-adhesive layer contains an aggregate of a plurality of emulsion particles (acrylic polymer emulsion particles) containing an acrylic polymer, but the present invention is not limited to this case, and for example, the case that the non-adhesive layer contains an aggregate of emulsion particles containing a polymer other than the acrylic polymer can appropriately conform to the above.

In the case where a solvent type composition is used as the non-adhesive layer forming polymer-containing composition for forming the non-adhesive layer, a solution obtained by dissolving the polymer that forms the non-adhesive layer in an appropriate solvent such as ethyl acetate or ethanol can be used.

The non-adhesive layer forming polymer-containing composition may contain an acid or a base (ammonia water or the like) used for pH adjustment or the like, as necessary. The composition may further contain various additives such as a crosslinking agent, a viscosity regulator (such as a thickener), a leveling agent, a release modifier, a plasticizer, a softener, a filler, a coloring agent (pigment, dye or the like), a surfactant, an antistatic agent, a preservative, an age resister, an ultraviolet absorber, an antioxidant and a light stabilizer. However, a crosslinking agent is preferably not contained in the non-adhesive layer forming polymer-containing composition for the reason that the non-adhesive layer becomes too hard, so that the non-adhesive layer may be difficult to break and the adhesive body (adhesive layer) may be broken by the impact at break of the non-adhesive layer.

In the adhesive article of this embodiment, the adhesive constituting the adhesive body is not particularly limited and can be conventional adhesives. The adhesive may be an acrylic adhesive, a rubber adhesive, a vinyl alkyl ether adhesive, a silicone adhesive, a polyester adhesive, a polyamide adhesive, a urethane adhesive, a fluorine adhesive and an epoxy adhesive. Above all, a rubber adhesive and an acrylic adhesive are preferred from the standpoint of adhesiveness, and an acrylic adhesive is particularly preferred. One kind alone of the adhesive may be used and it may be used by combining two or more kinds. The adhesive in this embodiment is preferably a pressure-sensitive adhesive that has adhesiveness at normal temperatures and can attach an adherend to the surface thereof by a pressure caused on contact between the surface of the adhesive and the surface of the adherend. The pressure-sensitive adhesive does not require heating and therefore can be applied to an adherend that is weak against heat.

The acrylic adhesive contains, as a main ingredient, a polymer of monomers including a (meth)acrylic acid alkyl ester such as ethyl acrylate, butyl acrylate, 2-ethylhexyl acrylate, isooctyl acrylate or isononyl acrylate as a main component, and a modifying monomer such as acrylonitrile, vinyl acetate, styrene, methyl methacrylate, acrylic acid, maleic anhydride, vinylpyrrolidone, glycidyl methacrylate, dimethyl aminoethyl methacrylate, hydroxy ethyl acrylate or acrylamide, added to the main ingredient as necessary.

The rubber adhesive contains a rubber polymer such as natural rubber, a styreneisoprene-styrene block copolymer, a styrene-butadiene-styrene block copolymer, a styrene-ethylene-butylene-styrene copolymer, a styrene-butadiene rubber, polybutadiene, polyisoprene, polyisobutylene, butyl rubber, chloroprene rubber or silicone rubber, as a main ingredient.

Tackifying resins such as rosin type, terpene type, styrene type, aliphatic petroleum type, aromatic petroleum type, xylene type, phenol type, coumarone indene type and their hydrogenated products, and various additives such as a crosslinking agent, a viscosity regulator (such as a thickener), a leveling agent, a release modifier, a plasticizer, a softener, a filler, a coloring agent (pigment, dye or the like), a surfactant, an antistatic agent, a preservative, an age resister, an ultraviolet absorber, an antioxidant and a light stabilizer can be appropriately added to those adhesives.

Any type of a solvent type adhesive and an aqueous dispersion type adhesive can be used as the adhesive. An aqueous dispersion type adhesive is preferred in that high-speed coating is possible, it is environmentally friendly and influence (swelling, dissolving) to a core material by solvent is small.

The linear adhesive body may contain a core material and an adhesive layer covering the core material.

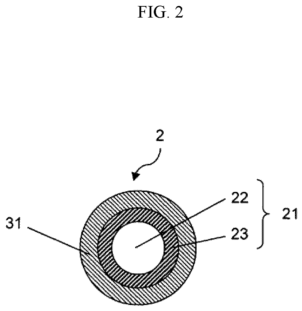

Fig. 2 shows a schematic cross-sectional view in a direction orthogonal to a longitudinal direction of the adhesive article in one configuration example of the adhesive article according to this embodiment. An adhesive article 2 shown in Fig. 2 includes a linear adhesive body 21 including a linear core material 22 and an adhesive layer 23 covering a longitudinal direction surface of the core material 22. Additionally, a non-adhesive layer 31 covers the surface (longitudinal direction surface) of the adhesive layer 23 in the adhesive body 21.

The cross-sectional shape of the adhesive article of this configuration example is a circle, but this embodiment is not limited to this and the cross-sectional shape can be an ellipse and a rectangle such as a square, other than a circle.

In the adhesive body having a core material, the adhesive layer may cover the entire surface (longitudinal direction surface) of the core material, but may cover only a part of the core material surface. The adhesive layer is typically continuously formed, but is not limited to this embodiment. For example, the adhesive layer may be formed regularly such as a dot shape or a stripe shape or in a random pattern. The edge of the core material may be covered or may not be covered with the adhesive layer. For example, when the adhesive article is cut during production process or when used, the edge of the core material may not be covered with the adhesive layer. In any case, the surface (longitudinal direction surface) of the adhesive layer is covered with the non-adhesive layer.

The core material used in the adhesive article is not particularly limited so long as it does not disturb stretching of the adhesive article, but a core material composed of a material that is stretchable by itself is preferred. For example, a resin, a rubber, a foam, an inorganic fiber and composites of those can be used. Examples of the resin include polyolefins such as polyethylene (PE), polypropylene (PP), an ethylene-propylene copolymer and an ethylenevinyl acetate copolymer; polyesters such as polyethylene terephthalate (PET); vinyl chloride resins; vinyl acetate resins; polyimide resins; polyamide resins; and fluoride resins. Examples of the rubber include natural rubber and synthetic rubbers such as polyurethane. Examples of the foam include foamed polyurethane and foamed polychloroprene rubber. Examples of the fiber include glass fibers, carbon fibers and metal fibers. The cross-sectional shape of the core material is not particularly limited, but generally has a cross-sectional shape according the cross-sectional shape of the core material.

As material of the yarn-like core material that can be used in a yarn-like adhesive article, various polymer materials such as rayon, cupra, acetate, promix, nylon, aramide, vinylon, vinylidene, polyvinyl chloride, polyester, acryl, polyethylene, polypropylene, polyurethane, polychlal and polylactic acid; glasses; carbon fibers; various rubbers such as natural rubber and urethane rubber; natural materials such as cotton and wool; and metals can be used. As the form of the yarn-like core material, for example, monofilaments, multifilaments, span yarns, finished yarns generally called textured yarn, bulky yarn and stretched yarn that have been subjected to crimping or bulking or combined yarns obtained by, for example, twisting those can be used. The cross-sectional shape is not limited to only a circle, but can be a rectangular shape such as a square shape, a star shape, an elliptical shape, a hollow shape and the like.

The core material may contain various additives such as a filler (inorganic filler, organic filler or the like), an age resister, an antioxidant, an UV absorber, an antistatic agent, a lubricant, a plasticizer and a coloring agent (pigment, dye or the like). The conventional surface treatment such as corona discharge treatment, plasma treatment or application of a primer may be applied to the surface of the core material.

The size of the cross-section of the core material is not particularly limited and can be selected according to the purpose. For example, when the cross-sectional shape is a circle, its diameter is preferably 1 to 2000 $\mu$m and more preferably 10 to 1000 $\mu$m, from the standpoint of handling properties (easy to stretch and difficult to cut).

As the adhesive constituting the adhesive layer, the same adhesive as the adhesive that can constitute the above-described adhesive body can be used.

In the case of the adhesive article having a core material as shown in Fig. 2, the thickness of the adhesive layer is not particularly limited, but is, for example, preferably 1 $\mu$m or more and more preferably 3 $\mu$m or more, from the standpoint of adhesiveness. On the other hand, the thickness is, for example, preferably 200 $\mu$m or less and more preferably 150 $\mu$m or less, from the standpoint of drying properties.

The thickness of the non-adhesive layer is not particularly limited, but is, for example, preferably 0.1 $\mu$m or more and more preferably 1 $\mu$m or more, from the standpoints of securing of substantial non-adhesiveness before stretching and protection of the adhesive layer. On the other hand, the thickness is, for example, preferably 60 $\mu$m or less and more preferably 20 $\mu$m or less, from the standpoint of expression of adhesiveness.

In the present description, the term that the adhesive article in the initial state (before stretching) "does not substantially have adhesiveness (is substantially non-adhesive)" indicates that a tack value on the surface of the adhesive article measured by the following probe tack test 1 is 2 gf or less. Furthermore, the term that the adhesive article in the initial state (before stretching) "has adhesiveness" indicates that a tack value of the surface of the adhesive article measured by the following probe tack test 1 exceeds 2 gf. More specifically, the tack value is measured according to a probe tack measurement method described in the column of examples described hereinafter.

(Probe tack test 1)

After a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

In the present description, the term that the adhesive article after stretching "does not substantially have adhesiveness (is substantially non-adhesive)" indicates that a tack value on the surface of the adhesive article measured by the following probe tack test 2 is 2 gf or less. Furthermore, the term that the adhesive article after stretching "has adhesiveness" indicates that a tack value on the surface of the adhesive article measured by the following probe tack test 2 exceeds 2 gf. More specifically, the tack value is measured according to the probe tack measurement method described in the column of Examples described hereinafter.

(Probe tack test 2)

After the adhesive article has been stretched in a lengthwise direction and then a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

The term that the adhesive article "expresses adhesiveness by stretching" indicates that the adhesive article is substantially non-adhesive in the initial state before stretching and has adhesiveness after stretching.

In order that the expression of adhesiveness by stretching is better exhibited, the tack value after stretching to twice in a lengthwise direction of the adhesive article is preferably 1 gf or more larger than the tack value before stretching, more preferably 1.5 gf or more larger than the tack value before stretching and still more preferably 2 gf or more larger than the tack value before stretching.

From the same standpoint, the tack value after stretching to twice in a lengthwise direction of the adhesive article is preferably 1 gf or more, more preferably 1.5 gf or more and still more preferably 2 gf or more. The upper limit of the tack value after stretching to twice in a lengthwise direction of the adhesive article is not particularly limited, but is, for example, 100 gf or less from the standpoint of the balance with shear adhesive force.

From the same standpoint, the tack value after stretching to 4 times in a lengthwise direction of the adhesive article is preferably 2 gf or more larger than the tack value before stretching, more preferably 3 gf or more larger than the tack value before stretching and still more preferably 4 gf or more larger than the tack value before stretching.

From the same standpoint, the tack value after stretching to 4 times in a lengthwise direction of the adhesive article is preferably 2 gf or more, more preferably 3 gf or more and still more preferably 4 gf or more. The upper limit of the tack value after stretching to 4 times in a lengthwise direction of the adhesive article is not particularly limited, but is, for example, 100 gf or less from the standpoint of the balance with shear adhesive force.

A method of forming the adhesive article of this embodiment is not particularly limited. For example, the forming method in the case of using a non-adhesive layer forming polymer-containing composition as one example is described below.

An adhesive constituting an adhesive body is prepared and applied linearly on a separator using a dispenser to form an adhesive body. In the case where the adhesive body is an adhesive body having a core material and an adhesive layer, an adhesive layer can be formed on the surface of the core material by coating an adhesive on the surface of the core material by dipping, immersion, application or the like, followed by heat drying. The adhesive can be applied using the conventional coaters such as gravure roll coater, reverse roll coater, kiss roll coater, dip roll coater, bar coater, knife coater or spray coater. The drying temperature can be appropriately selected and used, but is preferably 40 to 200°C, more preferably 50 to 180°C and particularly preferably 70 to 120°C. The drying time can be a suitable time. The drying time is preferably 5 seconds to 20 minutes, more preferably 5 seconds to 10 minutes and particularly preferably 10 seconds to 5 minutes.

In forming the non-adhesive layer on the adhesive layer, for example, when a resin is used, the above-described each method of forming the adhesive layer may be appropriately applied using the non-adhesive layer forming polymer-containing composition. The drying conditions may also be appropriately used and may also follow the drying conditions of the adhesive layer described above. Even in the case of using a polymer material other than a resin, the same method can be appropriately applied using a solution of that material.

In the case of forming an emulsion type non-adhesive layer as the non-adhesive layer, the drying conditions of an aqueous dispersion type non-adhesive layer forming polymer-containing composition are preferably adjusted such that fusion (film formation) of emulsion particles is suppressed. Although this depends on the polymer constituting the emulsion particles, drying conditions are, for example, such that when a glass transition temperature of the polymer is Tg, the drying temperature is preferably Tg to Tg+50°C and more preferably Tg+5 to Tg+30°C, and the drying time is preferably 5 seconds to 20 minutes and more preferably 5 seconds to 10 minutes. It is considered that when the adhesive article has been stretched, the non-adhesive layer in which fusion of emulsion particles has been suppressed is broken in various directions from the interfaces of agglomerated emulsion particles and is easy to become fine scaly fragments.

In the case of using a metal material as the non-adhesive layer, deposition, sputtering or the like can be used, and in the case of using an inorganic material, a preparation method using sol gel reaction can be used.

The adhesive article of this embodiment has a linear shape and therefore can be stuck on a narrow member and narrow region while suppressing protrusion. Furthermore, the adhesive article is preferable for easy break-down (rework). For example, the adhesive article can be applied to fixation of a narrow frame of a portable terminal such as a mobile phone or a smart phone.

In addition, according to the adhesive article of this embodiment, since it is linear, it can be adhered to the surface of a narrow gap and can fill the gap, by expressing adhesiveness by stretching it after entering into the gap.

Furthermore, the adhesive article of this embodiment preferably has flexibility and is particularly preferably a yarnlike adhesive article that can bend in various directions and at various angles like a yarn. Such flexible adhesive article, particularly a yarnlike adhesive article, has the advantages that the adhesive article is easy to be applied to complicated shapes such as a curved line, a curved surface and unevenness, in addition to the effects described above.

For example, in the case where an adhesive tape is to be stuck on an adherend having a complicatedly shaped partion such as a curved line, a curved surface and unevenness, an wrinkle or overlap occur on such portion and it is difficult to stick the adhesive tape beautifully while suppressing protrusions. Furthermore, the portion at which the wrinkle or overlap occurred may become a factor of decreasing adhesive force. In order to stick the adhesive tape such that wrinkle and overlap do not occur, it may be considered to cut the adhesive tape finely and stuck the same, but this greatly deteriorates workability. On the other hand, a flexible adhesive article, particularly a yarnlike adhesive article can be strongly stuck on complicatedly shaped portion such as a curved line, a curved surface and unevenness without occurrence of wrinkle and overlap. Furthermore, the adhesive article can be stuck to the desired part at one time, that is, by one step, and therefore has excellent workability and can be applied to automated line.

One example of specific uses of the yarnlike adhesive article is a use for fixing cables such as electric wire and optical fiber, optical fiber sensors such as LED fiber light and FBG (Fiber Bragg Gratings), various wire materials (linear members) such as a yarn, a string and a wire and narrow members, in a desired form. For example, even in the case of fixing a wire material or a narrow member to other members in a complicated shape, if the yarnlike adhesive article is used, the adhesive article can be strongly fixed to other members according to the complicated shape that a wire materials and a narrow member have, with excellent workability while suppressing protrusions, wrinkles and overlaps. In the case of fixing a wire material or a narrow member to another member, after the yarnlike adhesive article has been first stuck on the surface of another member according to the form that wire material and narrow member are to be fixed thereto, the wire material or narrow member can be stuck to the adhesive article stuck on the surface of another member and then fixed thereto. Alternatively, after sticking the yarnlike adhesive article to the wire material and narrow member, the wire material or narrow member may be fixed to another member in a desired form.

Furthermore, the yarnlike adhesive article can be suitably used in uses of prefixing (temporary tacking) of an article for prefixing (temporarily tacking) one article to the surface of another article. More specifically, the yarnlike adhesive article is particularly suitably applied to uses of prefixing (temporary tacking) when producing textile products, leather products and the like such as clothes, shoes, bags and hats. However, the uses are not limited to those, and the yarn-shape adhesive article is suitably used in various uses in which prefixing (temporary tacking) is desired.

For example, when one article is to be fixed to the surface of another article, one article is previously prefixed to the surface of another article using the yarnlike adhesive article, followed by positioning, and both articles are then fixed (actually fixed) to each other by a fixation method such as thermocompression bonding or sewing. In this case, a yarnlike adhesive article makes it easy to prefix while avoiding the part provided for fixing together both articles. For example, in the case of sewing textile products and leather products, by conducting prefixation using the yarnlike adhesive article, the prefixation can be easily conducted while avoiding a sewing part and sticking of an adhesive to a needle can be easily prevented.

Furthermore, if the yarnlike adhesive article is used, even when both articles have complicated shape such as a curved line, a curved surface or unevenness as described above, both articles can be well stuck to each other while suppressing protrusions, wrinkles and overlaps. Additionally, both articles can be stuck to each other in one step, and workability is good.

Furthermore, for example, even in deformable members such as a textile, a cloth and a leather that constitute textile products and leather products, deformation of the members by pulling can be suppressed or prevented by conducting prefixation by the yarnlike adhesive article, and design after fixing (actual fixing) is better.

Furthermore, the yarnlike adhesive can be easily extracted and removed from a space between both articles that were fixed (actually fixed) as necessary after fixation (actual fixation) of both articles. This can prevent protrusions of an adhesive and can well prevent deterioration of design derived from discoloration with time of a residual adhesive.

Furthermore, the yarnlike adhesive article can be twisted with a yarn made of other material to form a composite yarn or can be woven with a yarn or cloth (including nonwoven fabric and sheet) made of other material, thereby function combination can be attempted.

Examples

The present invention is specifically described below by reference to examples, but the invention is not construed as being limited to those examples.

(Example 1)

(Preparation of aqueous dispersion type acrylic adhesive composition for adhesive layer formation)

40 parts by weight of ion-exchanged water were placed in a reaction vessel equipped with a cooling pipe, a nitrogen introduction pipe, a thermometer and a stirrer, and the water was stirred at 60°C for 1 hour or more while introducing nitrogen gas, thereby conducting nitrogen substitution. 0.1 parts by weight of 2,2'-azobis[N-(2-carboxyethyl)-2-methylpropionamidine] n hydrate (polymerization initiator) were added to the reaction vessel. Monomer emulsion A was gradually added dropwise to the reaction vessel over 4 hours while maintaining the system at 60°C, thereby promoting emulsion polymerization reaction. The monomer emulsion A used was an emulsion obtained by adding 98 parts by weight of 2-ethylhexyl acrylate, 1.25 parts by weight of acrylic acid, 0.75 parts by weight of methacrylic acid, 0.05 parts by weight of lauryl mercaptan (chain transfer agent), 0.02 parts by weight of γ-methacryloxypropyl trimethoxysilane (manufactured by Shin-Etsu Chemical Co., Ltd., trade name "KBM-503") and 2 parts by weight of polyoxyethylene lauryl sodium sulfate (emulsifier) to 30 parts by weight of ion-exchanged water, followed by emulsifying. After completion of dropwise addition of the monomer emulsion A, the resulting mixture was maintained at 60°C for 3 hours, and the system was cooled to room temperature. The pH of the mixture was then adjusted to 7 by adding 10% ammonia water. Thus, an acrylic polymer emulsion (aqueous dispersion type acrylic polymer) A was obtained.

20 parts by weight on solids basis of a tackifying resin emulsion (manufactured by Arakawa Chemical Industries, Ltd., trade name "E-865NT") per 100 parts by weight of the acrylic polymer contained in the acrylic polymer emulsion A were added. Furthermore, the pH was adjusted to 7.2 and viscosity was adjusted to 10 Pa·s, using 10 wt% ammonia water as a pH regulator and polyacrylic acid (manufactured by Toagosei Co., Ltd., trade name "ARON B-500") as a thickener. Thus, an aqueous dispersion type acrylic adhesive composition A for adhesive layer was obtained.

(Preparation of acrylic polymer emulsion for non-adhesive layer formation)

40 parts by weight of ion-exchanged water were placed in a reaction vessel equipped with a cooling pipe, a nitrogen introduction pipe, a thermometer and a stirrer, and the water was stirred at 60°C for 1 hour or more while introducing nitrogen gas, thereby conducting nitrogen substitution. 0.1 parts by weight of 2,2'-azobis[N-(2-carboxyethyl)-2-methylpropionamidine] n hydrate (polymerization initiator) were added to the reaction vessel. Monomer emulsion B was gradually added dropwise to the reaction vessel over 4 hours while maintaining the system at 60°C, thereby promoting emulsion polymerization reaction. The monomer emulsion B used was an emulsion obtained by adding 95 parts by weight of butyl methacrylate, 5 parts by weight of acrylic acid and 2 parts by weight of polyoxyethylene lauryl sodium sulfate (emulsifier) to 30 parts by weight of ion-exchanged water, followed by emulsifying. After completion of dropwise addition of the monomer emulsion B, the resulting mixture was maintained at 60°C for 3 hours. The pH of the mixture was adjusted to 7 by adding 10 wt% ammonia water and the solids content was adjusted to 35% by ion-exchanged water. Thus, an acrylic polymer emulsion (aqueous dispersion type acrylic polymer) B was obtained.

(Preparation of adhesive article)

The aqueous dispersion type acrylic adhesive composition A was coated on polyurethane elastic fibers (multifilament, 310 dtex) by dipping, followed by drying at 80°C for 5 minutes, thereby forming an adhesive layer. The thickness of the adhesive layer formed was 65 μm. The acrylic polymer emulsion B was coated on the adhesive layer by dipping, followed by drying at 70°C for 5 minutes, thereby forming a non-adhesive layer. The thickness of the non-adhesive layer was 8 μm. Thus, a sample of a yarnlike adhesive article according to Example 1 was prepared.

(Example 2)

(Adhesive composition for adhesive layer formation)

The aqueous dispersion type acrylic adhesive composition A prepared in Example 1 was used as an adhesive composition for adhesive layer.

(Preparation of acrylic polymer solution for non-adhesive layer formation)

150 parts by weight of toluene, 90 parts by weight of butyl methacrylate and 10 parts by weight of acrylic acid were placed in a reaction vessel equipped with a cooling pipe, a nitrogen introduction pipe, a thermometer and a stirrer, and the resulting mixture was stirred at room temperature for 1 hour or more while introducing nitrogen gas, thereby conducting nitrogen substitution. 0.6 parts by weight of benzoyl peroxide were added to the reaction vessel, the temperature was elevated to 70°C and the reaction was conducted for 8 hours. Thereafter, toluene was added to the reaction liquid to adjust the solids content to 20%.

Thus, an acrylic polymer solution C was prepared.

(Preparation of adhesive article)

A sample of the yarnlike adhesive article according to Example 2 was prepared in the same manner as in Example 1 except that the acrylic polymer solution C was used as a forming material of the non-adhesive layer in place of the acrylic polymer emulsion B.

[Measurement of tack value in initial state (before stretching)]

The sample according to each Example and Comparative Example was stuck on a slide glass manufactured by Matsunami Glass Ind., Ltd. using a double-sided adhesive tape "No. 5000N" (thickness: 0.16 mm) manufactured by Nitto Denko Corporation. Thus, a test piece was prepared.

The test piece prepared was subjected to a probe tack test using a probe tack measuring device (TACKINESS TESTER Model TAC-II manufactured by RHESCA).

Specifically, after stainless steel probe (SUS304) having a diameter of 2 mm was brought into contact with the surface of the sample side of the test piece with a contact load of 50 gf under the environment of a measurement temperature of 23°C, a load applied to the probe when separating 1 mm in a rate of 30 mm/min was measured with time, and the maximum load required when peeling was obtained. The maximum load was defined to be the tack value (gf) in the initial state (before stretching).
When the tack value measured by the probe tack test is 2 gf or less, it is evaluated that the adhesive article "does not substantially have adhesiveness (is substantially non-adhesive)".

[Measurement of tack value after stretching]

After a sample of the adhesive article of each Example was stretched to twice or 4 times in a lengthwise direction, the sample was stuck on a slide glass manufactured by Matsunami Glass Ind., Ltd. using a double-sided adhesive tape "No. 5000N" (thickness: 0.16 mm) manufactured by Nitto Denko Co., Ltd. Thus, a test piece was prepared.
The test piece prepared was subjected to the probe tack test in the same test method and under the same test conditions as in the tack value in the initial state (before stretching), and the tack values (gf) after stretching twice or stretching to 4 times were measured.

(Elastic modulus at 23°C of non-adhesive layer)

Elastic modulus at 23°C of the non-adhesive layer was measured by the following measurement method.
Sheet-shaped test pieces each having a size of 3 mm width, 30 mm length and 0.04 mm thickness were prepared under the drying conditions of 70°C and 5 minutes using the acrylic polymer emulsion B for non-adhesive layer formation in Example 1 and using the acrylic polymer solution C for non-adhesive layer formation in Example 2. Storage modulus of each of those test pieces under the conditions of vibration frequency: 1 Hz, temperature range: -40 to 200°C and temperature rising rate: 5°C/min using a dynamic viscoelasticity measuring device (trade name: RSA-III, manufactured by TA Instruments).
Measurement results of a tack value in the initial state (before stretching), a tack value after stretching to twice and a tack value after stretching to 4 times in the sample of each Example are shown in Table 1. Additionally, the measurement results of storage modulus of the non-adhesive layers are shown.

[Table 1]

# EP 3 689 991 A1

Table 1

|  | Example 1 | Example 2 |
|---|---|---|
| Tack value in initial state (before stretching) (gf) | 1.3 | 1.0 |
| Tack value after stretching to twice (gf) | 4.1 | 3.5 |
| Tack value after stretching to 4 times (gf) | 8.3 | 7.2 |
| Storage modulus of non-adhesive layer (Pa) | $4.0 \times 10^8$ | $5.8 \times 10^8$ |

The adhesive articles of Examples 1 and 2 each were substantially non-adhesive in the initial state, but expressed adhesiveness by stretching. The adhesive article of Example 1 using an emulsion type non-adhesive layer as the non-adhesive layer showed high tack value after stretching as compared with Example 2 using a solution type non-adhesive layer as the non-adhesive layer.

Although various embodiments have been described above by reference to the drawings, it is needless to say that the present invention is not limited to those examples. It is apparent to one skilled in the art that various modifications or changes can be made within the scope of the claims, and it is understood that those modifications and changes belong to the technical scope of the present invention. Furthermore, each structural element in the above embodiments may be arbitrarily combined within a range that does not deviate the gist of the invention.

This application is based on Japanese Patent Application No. 2017-192139 filed September 29, 2017, Japanese Patent Application No. 2018-124925 filed June 29, 2018, and Japanese Patent Application No. 2018-137759 filed July 23, 2018, the disclosures of which are incorporated herein by reference.

REFERENCE SIGNS LIST

1, 2: Adhesive article
21: Adhesive body
22: Core material
23: Adhesive layer
31: Non-adhesive layer

**Claims**

1.  An adhesive article comprising a linear adhesive body and a non-adhesive layer covering a longitudinal direction surface of the adhesive body,
    wherein the adhesive article expresses adhesiveness when the non-adhesive layer is broken by stretching the adhesive article.

2.  The adhesive article according to claim 1, wherein the adhesive body comprises a linear core material and an adhesive layer covering a longitudinal direction surface of the core material.

3.  The adhesive article according to claim 1 or 2, which is a yarnlike adhesive article.

4.  The adhesive article according to any one of claims 1 to 3, wherein the non-adhesive layer contains a polymer material.

5.  The adhesive article according to claim 4, wherein the non-adhesive layer contains an aggregate of a plurality of emulsion particles.

6.  The adhesive article according to any one of claims 1 to 5, wherein a tack value of the adhesive article after stretching to twice in a lengthwise direction measured by the following probe tack test 2 is 1 gf or more larger than a tack value before stretching measured by the following probe tack test 1.
    (Probe tack test 1)
    After a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

(Probe tack test 2)

After the adhesive article has been stretched in a lengthwise direction and then a stainless steel probe (SUS304) having a diameter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

FIG. 1

FIG. 2

**INTERNATIONAL SEARCH REPORT**

| International application No. |
| --- |
| PCT/JP2018/036051 |

A. CLASSIFICATION OF SUBJECT MATTER
Int. Cl. C09J7/00(2018.01)i, C09J201/00(2006.01)i

According to International Patent Classification (IPC) or to both national classification and IPC

B. FIELDS SEARCHED

Minimum documentation searched (classification system followed by classification symbols)
Int. Cl. C09J7/00, C09J201/00

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 01-308471 A (NITTO DENKO CORP.) 13 December 1989, claims, page 2, lower left column to page 3, upper left column (Family: none) | 1, 3-4, 6 |
| Y | | 1-6 |
| Y | JP 03-231980 A (ISHIZAKI SHIZAI KK) 15 October 1991, claims (Family: none) | 1-6 |
| Y | JP 05-302069 A (SEKISUI CHEMICAL CO., LTD.) 16 November 1993, claims (Family: none) | 5 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06.11.2018 | 20.11.2018 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 689 991 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4380837 B
- JP 2017192139 A
- JP 2018124925 A
- JP 2018137759 A